# EUROPEAN PATENT APPLICATION

(11) **EP 4 783 590 A1**
(43) Date of publication of application: **29.07.2026**
(21) Application number: 23958381.8
(22) Date of filing: 08.11.2023
(51) Int. Cl.: H04N 21/24, H04N 21/258, H04N 21/442, H04N 21/45, H04N 21/81

(54) **DISPLAY DEVICE AND SERVER**

(71) Applicant: LG Electronics Inc., Yeongdeungpo-gu Seoul 07336 (KR)
(72) Inventor: WON, Jihyeon, Seoul 06772 (KR)
(74) Representative: Vossius & Partner Patentanwälte Rechtsanwälte mbB
(86) International application number: PCT/KR2023/017807
(87) International publication number: WO 2025/100580

(57) **Abstract**

A control method of a server capable of communicating with at least one display device according to an embodiment of the present disclosure comprises the steps of: receiving, from the at least one display device, information on a broadcast program viewed for a preconfigured time or longer, on the basis of the received information, deriving information on a total watch count for each broadcast program during a specific period; calculating a preference level for each broadcast program by applying a weight to at least one of a genre of each broadcast program and the number of times each broadcast program is broadcast during the specific period; and transmitting data corresponding to the calculated preference level to the at least one display device.

## Description

### TECHNICAL FIELD

The present disclosure relates to a server capable of communicating with at least one display device, and a display device capable of communicating with the server. More particularly, for example, the present disclosure relates to a process of recommending live TV and video on demand (VOD) content within a TV by using information such as broadcast schedule count information.

### BACKGROUND

In a country that supports an electronic program guide (EPG) service for real-time broadcast programs, viewing information (e.g., broadcast programs and channel data) is collected by a server and stored in a database.

However, according to the prior art, recommended content is provided by simply totaling only viewing counts (WATCH_COUNT).

For example, the total viewing counts of any broadcast program are summed up on a daily basis. Among 60 days of data aggregated on a daily basis, recommendations are made only in descending order of total viewing counts for each broadcast program.

However, according to the prior art, since only viewing counts are simply aggregated on a broadcast program basis, there is a problem in that the scores of actually popular dramas or entertainment programs are likely to be low.

Moreover, when the aggregation period is simply extended, there is a problem in that the rankings of the latest popular programs are pushed to lower ones.

In addition, in the case of broadcast programs that are aired with many reruns, there is a problem in that the probability of recommendation becomes excessively high compared to broadcast programs with fewer reruns.

Accordingly, to solve the aforementioned problems, a broadcast program recommendation solution that is more suitable for a user's needs is required.

### DISCLOSURE

### TECHNICAL PROBLEM

One of embodiments of the present disclosure is to provide a solution for recommending broadcast programs and VOD content more optimized for a user's needs by processing viewing information data with various factors (e.g., the number of airings of each broadcast program and the genre of each broadcast program).

One of embodiments of the present disclosure intends to define a graphical user interface (GUI) for a UX/UI required in a process of recommending broadcast programs and VOD content.

### TECHNICAL SOLUTION

According to any one of embodiments of the present disclosure, a control method of a server capable of communicating with at least one display device includes receiving information about a broadcast program watched for a preset time or longer from the at least one display device, deriving total viewing count information for each broadcast program during a specific period, based on the received information, calculating a preference for each broadcast program by applying a weight to at least one of a number of airings of the broadcast program during the specific period or a genre of the broadcast program, and transmitting data corresponding to the calculated preference to the at least one display device.

The preset time corresponds to, for example, 5 seconds, and the specific period corresponds to, for example, 7 days.

Further, the calculating further includes generating a normal distribution for numbers of airings of all broadcast programs during the specific period, deriving a Z score for the number of airings of each broadcast program, and as a final value of (the Z score) * (the total viewing count information for each broadcast program)/(the number of airings of each broadcast program during the specific period}) is larger, considering the broadcast program to have a higher preference.

Further, the considering further includes, when the broadcast program belongs to a specific genre, multiplying the final value by a weight of 0.2.

The specific genre includes at least one of news, home shopping, or film.

According to an embodiment of the present disclosure, a control method of a display device capable of communicating with a server includes transmitting information about a broadcast program watched for a preset time or longer to the server, receiving data corresponding to a preference for each broadcast program from the server, executing an arbitrary application, and displaying each broadcast program by sorting the program in a specific order according to the data corresponding to the preference.

Particularly, the specific order varies based on at least one of a number of airings of each broadcast program during a specific period or a genre of the broadcast program.

For example, when a type of the arbitrary application corresponds to a first type (e.g., including an integrated search application within a TV), each broadcast program is displayed by being sorted in the specific order according to the data corresponding to the preference.

For example, when the type of the arbitrary application corresponds to a second type (e.g., including a sports portal application), only broadcast programs belonging to a specific genre are displayed by being sorted in the specific order according to the data corresponding to the preference.

According to an embodiment of the present disclosure, a display device capable of communicating with a server includes a transceiver configured to transmit information about a broadcast program watched for a preset time or longer to the server, and receive data corresponding to a preference for each broadcast program from the server, a controller configured to execute an arbitrary application, and a display configured to display each broadcast program by sorting the program in a specific order according to the data corresponding to the preference.

The scope of rights of the present disclosure also includes the implementation by a third party of a computer-readable medium (e.g., application, memory, software, and so on) recording a program for performing any one of the above-described methods and the various embodiments described in the present disclosure.

### ADVANTAGEOUS EFFECTS

According to one of embodiments of the present disclosure, there is a technical effect of recommending broadcast programs and VOD content more optimized for user needs by processing viewing information data with various factors (e.g., the number of airings of each broadcast program and the genre of each broadcast program).

According to one of embodiments of the present disclosure, there is an advantage of defining a graphical user interface (GUI) for a UX/UI required in a process of recommending broadcast programs and VOD content.

Accordingly, additional effects that may contribute to the commercial success of display devices such as TVs are also expected.

In addition to the technical effects described above, it is obvious that effects that may be inferred by those skilled in the art from the present disclosure should also be considered.

### BRIEF DESCRIPTION OF THE DRAWINGS

FIG. 1 illustrates a protocol for transmitting and receiving data between a server and a display device according to any one of embodiments of the present disclosure.
FIG. 2 illustrates units such as broadcast programs used according to any one of embodiments of the present disclosure.
FIG. 3 is a flowchart illustrating a control method of a server according to any one of embodiments of the present disclosure.
FIG. 4 illustrates various data of various broadcast programs according to any one of embodiments of the present disclosure.
FIG. 5 illustrates a process of extracting a broadcast program that a user is highly likely to prefer, using a data format illustrated in FIG. 4.
FIG. 6 is a flowchart illustrating a control method of a display device according to any one of embodiments of the present disclosure.
FIG. 7 illustrates an example of a GUI provided by a display device according to any one of embodiments of the present disclosure.
FIG. 8 illustrates another example of a GUI provided by a display device according to any one of embodiments of the present disclosure.

### DETAILED DESCRIPTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function.

In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another. It will be understood that when an element is referred to as being "connected with" another element, the element can be directly connected with the other element or intervening elements may also be present.

In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

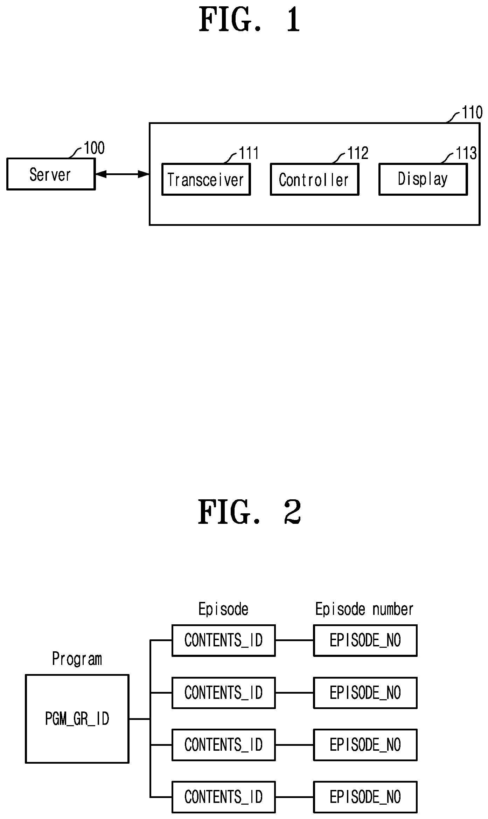

FIG. 1 illustrates a protocol for transmitting and receiving data between a server and a display device according to any one of embodiments of the present disclosure.

As illustrated in FIG. 1, an overall system according to an embodiment of the present disclosure includes a server 100 and a display device 110. However, the implementation of individual components also falls within the scope of rights of the present disclosure, and the scope of rights should be interpreted according to the claims. Further, although only one display device 110 is shown as an example in FIG. 1, the server 100 is capable of communicating with a plurality of display devices.

The server 100 receives information about broadcast programs watched for a preset time or longer from the display device 110.

Further, the server 100 derives information about the total viewing count of each broadcast program during a specific period based on the information received from the display device 110.

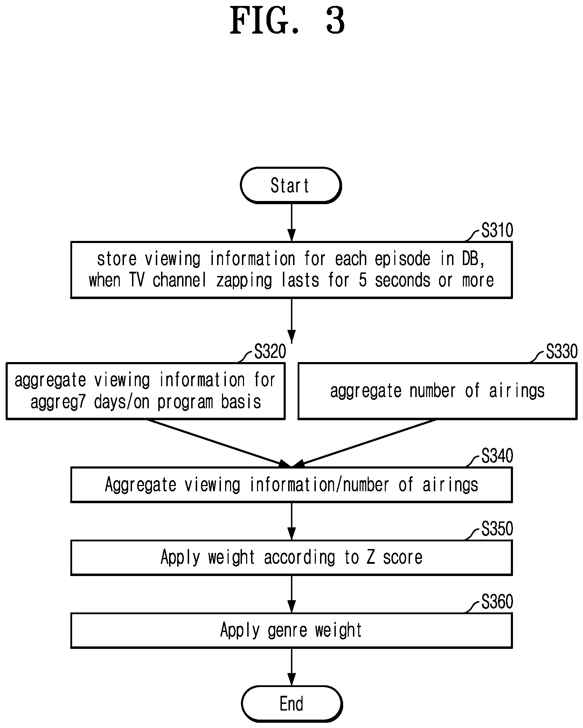

In addition, the server 100 calculates a preference for each broadcast program by applying a weight to at least one of the number of airings of the broadcast program during the specific period or the genre of the broadcast program. Related embodiments will be described below in more detail with reference to FIG. 3.

Then, the server 100 transmits data corresponding to the calculated preference to the display device 110.

The display device 110 includes a transceiver 111, a controller 112, and display 113.

The transceiver 111 transmits information about broadcast programs watched for the preset time or longer to the server 100, and receives data corresponding to the preference for each broadcast program from the server 100.

The controller 112 executes a specific application, and the display 113 sorts and displays each broadcast program in a specific order according to the data corresponding to the preference.

The specific order varies based on, for example, at least one of the number of airings of each broadcast program during the specific period or the genre of the broadcast program.

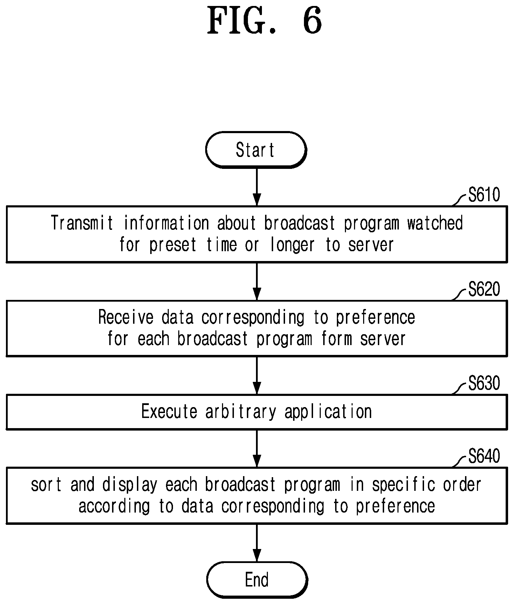

A more specific operation process of the display device 110 will be described below in detail with reference to FIG. 6.

FIG. 2 illustrates units such as broadcast programs used according to any one of embodiments of the present disclosure.

According to an embodiment of the present disclosure, data may be collected through communication between a server and a display device on a broadcast program basis or on a channel basis.

That is, calculating not only the preference of a specific broadcast program but also the preference of a specific channel more accurately falls within the scope of rights of the present disclosure. However, in the present disclosure, a process of deriving the preference of a specific broadcast program will be described as an example, for convenience of description.

As illustrated in FIG. 2, a program for which preference is to be calculated in the present disclosure includes a plurality of episodes. Each episode is identified by a number or the like.

Therefore, when it is said that the preference of a specific broadcast program is calculated in the present disclosure, this may mean that the preference is calculated not only for the specific broadcast program but also for each of episodes.

For example, the preference for drama A may be calculated, or the preference for a second episode of drama A may be calculated.

FIG. 3 is a flowchart illustrating a control method of a server according to any one of embodiments of the present disclosure.

Before describing FIG. 3, the prior art will first be described.

According to the prior art, a server simply stores viewing count information on an episode basis. Then, the server sums the total viewing count on a daily basis for each episode.

Finally, the server recommends episodes in descending order of total viewing counts.

However, according to the above prior art, since viewing counts (WATCH_COUNT) are aggregated on an episode basis, there is a problem in that actually popular dramas or entertainment programs fail to be recommended.

Moreover, weekly data do not exist according to the prior art. However, since the cycle of a TV program is usually on a weekly basis, a disclosure that considers this is necessary.

In addition, when only viewing count information is simply used, the viewership ratings of one-time programs such as news/sports increase, making the prior art unsuitable for calculating VOD popularity.

On the other hand, as illustrated in FIG. 3, the server according to an embodiment of the present disclosure does not use broadcast-related information received from the display device as it is, but processes it with several factors, thereby providing a technical effect of enabling a recommendation service closer to a user's actual preference. Although it is assumed that the operations of FIG. 3 are performed in the server, designing some or all of the operations to be performed in another device, such as a display device, also falls within another scope of rights of the present disclosure.

First, as illustrated in FIG. 3, the server receives information about broadcast programs watched for a preset time (e.g., 5 seconds) or longer from at least one display device and stores the information in a database (DB) (S310).

The server derives information about the total viewing count of each broadcast program during a specific period (e.g., 7 days) based on the information received from at least one display devices (S320).

Further, the server aggregates all of the numbers of airings of each broadcast program during the specific period based on EPG information or the like (S330). All of the numbers of airings are aggregated by including both live broadcasts and reruns regardless of channels.

The server calculates a preference for each broadcast program by applying a weight to at least one of the number of airings of the broadcast program or the genre of the broadcast program during the specific period.

More specifically, the server calculates the value of (the information about the total viewing count of each broadcast program)/(the number of airings of the broadcast program during the specific period) (S340).

Then, the server generates a normal distribution for the numbers of airings of all broadcast programs during the specific period, derives a Z score for the number of airings of each broadcast program, and applies this as a weight to the value obtained in step S340 (S350).

The server additionally applies a genre weight to the value obtained in step S350 (S360).

The embodiment of FIG. 3 will be further described through a specific case for a particular program.

It is assumed that the total viewing count of "I Live Alone" over 7 days (e.g., from October 1, 2023, to October 31, 2023) is aggregated as 759,377. This is data collected from a plurality of display devices to which the present disclosure is applied. However, the present disclosure is also applicable to a single display device.

The server creates a normal distribution of the numbers of airings of all programs over the 7 days, and calculates and stores the Z score for the number of airings of each broadcast program.

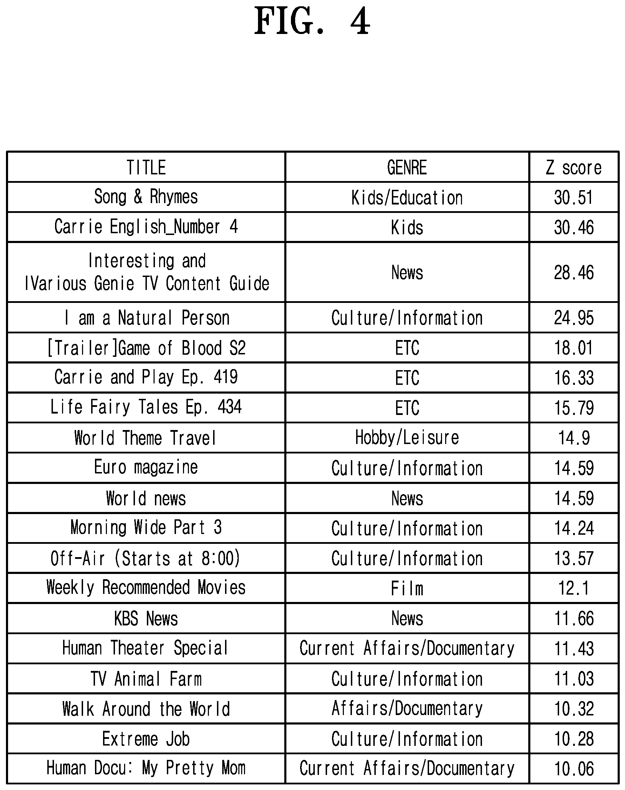

For example, as a broadcast program has a larger positive Z score value, the broadcast program is considered to be one that is aired more frequently. Related embodiments will be described below with reference to FIG. 4.

It has been experimentally identified that since the deviation in the number of airings for each broadcast program is very large, a simple summation may result in an imbalance based on the number of airings. Therefore, it is necessary to correct a viewership rating (popularity) according to the number of airings.

There are programs with an exceptionally large number of airings. When a total viewing count is simply divided by N airings, programs with many reruns may be disadvantaged. For example, since a popular program (e.g., "I Live Alone") is rerun many times across various cable channels, it may suffer much more of a disadvantage than its actual firstrun viewership rating suggests.

For example, when the number of airings of "I Live Alone" over 7 days is 156, it is assumed that a Z score of 7.08 is derived from the normal distribution of the numbers of airings of all other broadcast programs.

Further, the server calculates a value (4,867) by dividing the total viewing count (759,377) of "I Live Alone" over 7 days by the number of airings (156).

Then, the server multiplies the above obtained value of 4,867 by the Z score of 7.08, which the number of airings of "I Live Alone" for one week, to obtain a resultant value of 34,458.

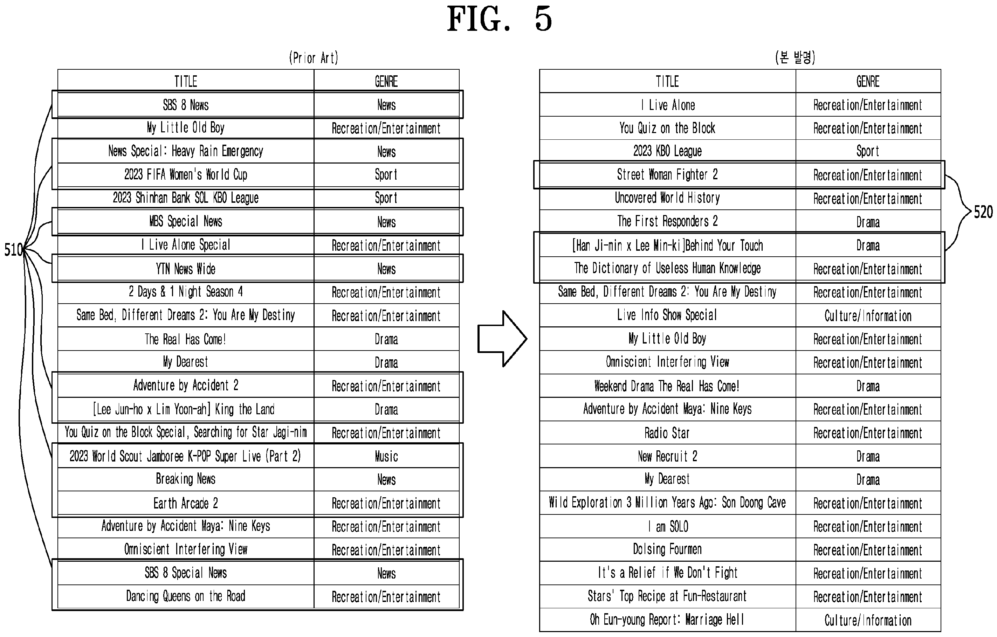

The server may recommend popular broadcast programs in descending order of the resultant values obtained above. However, according to another embodiment of the present disclosure, the server is designed to apply a weight of 0.2 to the above resultant values, limited to broadcast programs of a specific genre. For example, since there is no demand for rewatching for genres such as news, home shopping, and film, it is necessary to correct the resultant values to be relatively lower. On the contrary, since there is demand for VOD in the sports genre, the aforementioned 0.2 weight is not applied. Related embodiments will be described below in more detail with reference to FIG. 5.

Although not illustrated in FIG. 3, the server according to an embodiment of the present disclosure transmits data corresponding to the preference calculated as described above to the at least one display device after step S360.

Steps S340 and S350 illustrated in FIG. 3 are summarized as follows.

The server generates a normal distribution for the numbers of airings of all broadcast programs during the specific period (e.g., 7 days) and derives a Z score for the number of airings of each broadcast program.

As the final value of (Z score) * (total viewing count of each broadcast program/number of airings of each broadcast program during the specific period) increases, the server considers the broadcast program to have a higher preference.

The aforementioned Z score will be described in more detail below with reference to FIG. 4.

FIG. 4 illustrates various data of various broadcast programs according to any one of embodiments of the present disclosure.

As illustrated in FIG. 4, the server according to an embodiment of the present disclosure may list the popularity of broadcast programs on an episode basis.

The Z scores illustrated in FIG. 4 may be obtained by generating a normal distribution for the numbers of airings of all broadcast programs during, for example, a specific period (7 days) at the server.

For example, when the average number of airings of all broadcast programs is 10, a Z score indicates how far a program is from the average value. Therefore, the broadcast programs illustrated in FIG. 4 are those that are aired more frequently than the average number of airings.

However, as described above, there is no need for the server to recommend broadcast programs of a specific genre for which a rewatch service is needed, and there is also a problem where a user may mistake such recommendations for an error. An embodiment to solve this will be described in more detail below with reference to FIG. 5.

FIG. 5 illustrates a process of extracting a broadcast program that a user is highly likely to prefer, using the data format illustrated in FIG. 4.

When ranking correction is not performed for a specific genre which is less likely to be rewatched, there is a problem in that broadcast programs 510 such as news are recommended, as illustrated on the left side of FIG. 5.

To solve this, according to an embodiment of the present disclosure, the server multiplies the resultant value for a specific genre (e.g., news, home shopping, and film) by a weight of 0.2 to correct data so that recommendations are avoided as much as possible, as described above.

Designing in this manner may lead the technical effect that the rankings of actually popular broadcast programs 520 rise, and the broadcast programs 510 which are less likely to be rewatched are automatically excluded from high rankings, as illustrated on the right side of FIG. 5.

While FIGS. 2 to 5 are embodiments related to the server, FIGS. 6 to 8, which will be described below, are embodiments related to the display device. However, those skilled in the art may combine some or all of the embodiments as necessary.

FIG. 6 is a flowchart illustrating a control method of a display device according to any one of embodiments of the present disclosure.

As illustrated in FIG. 6, the display device transmits information about a broadcast program watched for a preset time (e.g., 5 seconds) or longer to the server (S610).

The display device receives data corresponding to a preference for each broadcast program from the server (S620).

Further, the display device executes a specific application (S630) and sorts and displays each broadcast program in a specific order according to the data corresponding to the preference (S640).

As described above, the specific order may be determined by the server and vary based on at least one of the number of airings of each broadcast program during a specific period or the genre of the broadcast program.

The display device according to an embodiment of the present disclosure is designed such that the recommended broadcast programs in step S640 vary according to the type of application executed in step S630.

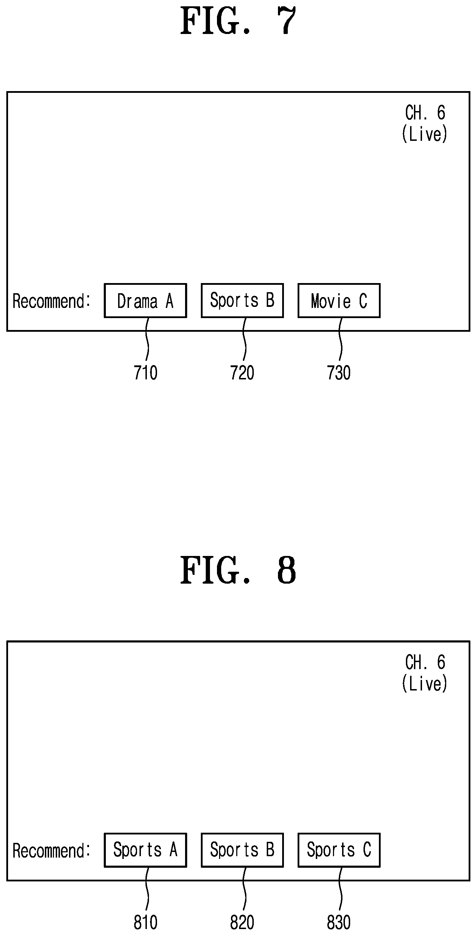

Related embodiments will be described in more detail below with reference to FIGS. 7 and 8.

FIG. 7 illustrates an example of a GUI provided by a display device according to any one of embodiments of the present disclosure.

It is assumed that while the display device according to an embodiment of the present disclosure is tuned to a general live broadcast (e.g., Channel 6), a first type of application (e.g., an integrated search application within a TV) is executed.

As illustrated in FIG. 7, the display device displays each broadcast program by sorting it in a specific order of 710, 720, and 730 according to data corresponding to preferences received from the aforementioned server.

FIG. 8 illustrates another example of a GUI provided by a display device according to any one of embodiments of the present disclosure.

It is assumed that while the display device according to an embodiment of the present disclosure is tuned to a general live broadcast (e.g., Channel 6), a second type of application (e.g., a sports portal application) is executed.

As illustrated in FIG. 8, the display device displays only broadcast programs belonging to a specific genre (e.g., sports) by sorting them in a specific order of 810, 820, and 830 according to data corresponding to preferences received from the aforementioned server.

Various embodiments may be implemented using a machine-readable medium having instructions stored thereon for execution by a processor to perform various methods presented herein. Examples of possible machine-readable mediums include HDD(Hard Disk Drive), SSD(Solid State Disk), SDD(Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet).

Although the data processing apparatus and method according to the embodiments of the present disclosure have been described as specific embodiments, these are merely examples, and the present disclosure is not limited thereto and should be interpreted as having the broadest scope according to the basic ideas disclosed in the present disclosure. Those skilled in the art may implement embodiments not specified by combining or substituting the disclosed embodiments, but these also do not depart from the scope of rights of the present disclosure. In addition, those skilled in the art may easily change or modify the disclosed embodiments based on the present disclosure, and it is clear that such changes or modifications also fall within the scope of rights of the present disclosure.

### MODE FOR INVENTION

Since various embodiments of the present disclosure have been described in detail in the preceding sections, those skilled in the art may repeatedly practice the present disclosure even if redundant descriptions are omitted.

### INDUSTRIAL APPLICABILITY

Since the present disclosure is applicable to a display device such as a TV, its industrial applicability is acknowledged.

## Claims

1. A control method of a server capable of communicating with at least one display device, the method comprising:
receiving information about a broadcast program watched for a preset time or longer from the at least one display device;
deriving total viewing count information for each broadcast program during a specific period, based on the received information;
calculating a preference for each broadcast program by applying a weight to at least one of a number of airings of the broadcast program during the specific period or a genre of the broadcast program; and
transmitting data corresponding to the calculated preference to the at least one display device.

2. The control method of claim 1, wherein the preset time corresponds to 5 seconds, and
wherein the specific period corresponds to 7 days.

3. The control method of claim 1, wherein the calculating includes:
generating a normal distribution for numbers of airings of all broadcast programs during the specific period, and deriving a Z score for the number of airings of each broadcast program; and
as a final value of (the Z score) * (the total viewing count information for each broadcast program)/(the number of airings of each broadcast program during the specific period}) is larger, considering the broadcast program to have a higher preference.

4. The control method of claim 3, wherein the considering further includes, when the broadcast program belongs to a specific genre, multiplying the final value by a weight of 0.2.

5. The control method of claim 4, wherein the specific genre includes at least one of news, home shopping, or film.

6. A control method of a display device capable of communicating with a server, the method comprising:
transmitting information about a broadcast program watched for a preset time or longer to the server;
receiving data corresponding to a preference for each broadcast program from the server;
executing an arbitrary application; and
displaying each broadcast program by sorting the program in a specific order according to the data corresponding to the preference,
wherein the specific order varies based on at least one of a number of airings of each broadcast program during a specific period or a genre of the broadcast program.

7. The control method of claim 6, wherein the preset time corresponds to 5 seconds.

8. The control method of claim 6, wherein when a type of the arbitrary application corresponds to a first type, each broadcast program is displayed by being sorted in the specific order according to the data corresponding to the preference.

9. The control method of claim 7, wherein when a type of the arbitrary application corresponds to a second type, only broadcast programs belonging to a specific genre are displayed by being sorted in the specific order according to the data corresponding to the preference.

10. The control method of claim 8, wherein the first type includes an integrated search application within a TV, and
wherein the second type includes a sports portal application.

11. A display device capable of communicating with a server, the display device comprising:
a transceiver configured to transmit information about a broadcast program watched for a preset time or longer to the server, and receive data corresponding to a preference for each broadcast program from the server;
a controller configured to execute an arbitrary application; and
a display configured to display each broadcast program by sorting the program in a specific order according to the data corresponding to the preference,
wherein the specific order varies based on at least one of a number of airings of each broadcast program during a specific period or a genre of the broadcast program.

12. The display device of claim 11, wherein the preset time corresponds to 5 seconds.

13. The display device of claim 11, wherein when a type of the arbitrary application corresponds to a first type, each broadcast program is displayed by being sorted in the specific order according to the data corresponding to the preference.

14. The display device of claim 13, wherein when the type of the arbitrary application corresponds to a second type, only broadcast programs belonging to a specific genre are displayed by being sorted in the specific order according to the data corresponding to the preference.

15. The display device of claim 14, wherein the first type includes an integrated search application within a TV, and
wherein the second type includes a sports portal application.
